# EUROPÄISCHE PATENTSCHRIFT

(11) **EP 3 129 604 B1**
(45) Veröffentlichungstag und Bekanntmachung des Hinweises auf die Patenterteilung: **05.12.2018**
(21) Anmeldenummer: 15744517.2
(22) Anmeldetag: 21.07.2015
(51) Int. Cl.: F01D 11/04, F16J 15/40, F01D 25/18

(54) **MASCHINE MIT EINER WELLE UND EINEM LAGER**
MACHINE WITH A SHAFT AND A BEARING
MACHINE AVEC UN ARBRE ET UN PALIER

(30) Priorität: 30.07.2014 EP 14179077
(43) Veröffentlichungstag der Anmeldung: 15.02.2017
(73) Patentinhaber: Siemens Aktiengesellschaft, 80333 München (DE)
(72) Erfinder: KRÜTZFELDT, Joachim, 45481 Mülheim an der Ruhr (DE); SCHNEIDER, Oliver, 46487 Wesel (DE)
(86) Internationale Anmeldenummer: PCT/EP2015/066640
(87) Internationale Veröffentlichungsnummer: WO 2016/016048

(56) Entgegenhaltungen:
- DE-A1- 4 420 973
- GB-A- 2 167 141
- US-A1- 2012 201 661

## Beschreibung

Die Erfindung betrifft eine Maschine, wie beispielsweise eine Strömungsmaschine, die mit einer Welle und einem ölgeschmierten Lager mit einer Sperrgasdichtung versehen werden kann, um ein Austreten des Öls aus dem Lager zu unterbinden. Die Sperrgasdichtung kann eine Sperrkammer zwischen einer sich radial erstreckenden rotierenden Wellenwand und dem feststehenden Lagergehäuse aufweisen. Im Betrieb der Maschine, wenn die Welle rotiert und die Sperrgasdichtung mit einem Sperrfluid beaufschlagt ist, wird das Sperrfluid in der Sperrkammer über Reibung an der Wellenwand in Rotation versetzt. Im rotierenden Sperrfluid bildet sich durch die Wirkung der Zentrifugalkräfte ein Druckabfall nach radial innen aus, wodurch nachteilig der Druck an dem Lagergehäuse gering ist, so dass das Öl aus dem Lagergehäuse austreten kann.
Das Austreten des Öls ist besonders kritisch, wenn dies am Turbinenaustritt einer Gasturbine auftritt, weil hier das Öl in Kontakt mit heißen Teilen der Gasturbine treten kann. Das Öl kann durch den Kontakt verkoken oder verbrennen und dadurch den sicheren Betrieb der Betrieb der Maschine gefährden. Herkömmlich wird das Problem gelöst, in dem die Sperrgasdichtung mit dem Sperrfluid unter hohem Druck beaufschlagt wird, was jedoch nachteilig für den Wirkungsgrad der Gasturbine ist.
Weiter ist aus der US 2012/201661 A1 eine Lageranordnung bekannt, bei der in einem Zwischenraum, welcher jeweils über eine Labyrinthdichtung einerseits zu einem hydraulischen Lager und andererseits zu einem Raum mit atmosphärischen Druck abgeschirmt ist, ein Überdruck erzeugt werden kann. Die Erzeugung des Überdrucks erfolgt mit Hilfe eine Fluidleitung, die im Zwischenraum mündet und mit der ein entsprechenden Fluid zuführbar ist. Der Zwischenraum kann dabei durch eine Abschirmung weiter unterteilt werden, um den Teilraum mit der lokalen Druckerhöhung möglichst nahe am Ende der Labyrinthdichtung anzusiedeln. Nachteilig ist jedoch hierbei, dass ein Überdruck zur Erzeugung einer zuverlässigen Abdichtung erforderlich ist.

Aufgabe der Erfindung ist es, eine Maschine mit einer Welle und einem Lager sowie ein Verfahren zum Betreiben der Maschine zu schaffen, wobei eine gute Dichtwirkung gegenüber dem Lager erzielt wird.

Die erfindungsgemäße Maschine weist eine Welle, die eine Stufe aufweist, so dass ein erster Wellenabschnitt mit einem ersten Durchmesser, ein zweiter Wellenabschnitt mit einem zweiten Durchmesser, der kürzer als der erste Durchmesser ist, und eine sich radial erstreckende sowie rotierbare Wellenstirnfläche ausgebildet sind, ein Gehäuse und ein Lager auf, das die Welle an ihrem zweiten Wellenabschnitt an dem Gehäuse abstützt und mit einem Schmierfluid geschmiert ist, wobei die Wellenstirnfläche einer sich radial erstreckenden sowie feststehenden Lagerstirnseite zugewandt ist, wodurch eine mit einem Sperrfluid, mittels dem ein Austreten des Schmierfluids aus dem Lager unterbindbar ist, beaufschlagbaren Sperrkammer ausgebildet ist, die axial von der Wellenstirnfläche und der Lagerstirnseite sowie radial innen von dem von dem Lager freigelassenen zweiten Wellenabschnitt begrenzt ist, dadurch gekennzeichnet, dass die Sperrkammer über eine Passage mit der Umgebung verbunden ist und dass in der Sperrkammer eine sich radial erstreckende und feststehende Trennplatte angeordnet ist, so dass eine aerodynamische Abschirmung der Lagerstirnseite von der Wellenstirnfläche erfolgt, wodurch der Bereich zwischen der Trennplatte und der Lagerstirnseite beim Rotieren der Welle im Wesentlichen wirbelfrei, d.h. drallfrei ist.

Der Bereich zwischen der Trennplatte und der Lagerstirnseite ist axial von keinen rotierenden Wänden begrenzt, so dass sich in diesem Bereich auch kein die Druckverhältnisse bestimmender Wirbel ausbilden kann. Der Bereich zwischen der Wellenstirnfläche und der Trennplatte ist axial von einer rotierenden Wand begrenzt, nämlich von der Lagerstirnseite, so dass sich ein Wirbel in diesem Bereich ausbilden kann. Dieser Wirbel wirkt sich jedoch aufgrund der abschirmenden Wirkung der Trennplatte nicht auf den Bereich zwischen der Trennplatte und der Lagerstirnseite aus. Damit hat das Sperrfluid in dem Bereich zwischen der Trennplatte und der Lagerstirnseite im Wesentlichen den Druck, mit dem die Sperrkammer beaufschlagt ist, und ist nur Wandreibungsverlusten ausgesetzt. Damit ist der Druck des Sperrfluids an der Lagerstirnseite hoch, wodurch eine gute Dichtwirkung gegenüber dem Lager erzielbar ist. Die Trennplatte stellt eine derart einfache konstruktive Maßnahme dar, dass bestehende Maschinen auch mit der Trennplatte nachgerüstet werden können.

Es ist bevorzugt, dass zwischen dem radial innen liegenden Längsende der Trennplatte und der Welle ein Radialspalt ausgebildet ist. Dadurch wird vorteilhaft ein Anschleifen der Trennplatte an der Welle unterbunden. Der Radialspalt hat bevorzugt eine Erstreckung in Radialrichtung von 0,1 mm bis 10 mm. Durch die Untergrenze von 0,1 mm kann vorteilhaft das Anschleifen unterbunden werden. Durch die Obergrenze von 10 mm wird vorteilhaft sichergestellt, dass sich kein Wirbel in dem Bereich zwischen der Trennplatte und der Lagerstirnseite ausbildet. Durch die Obergrenze ist auch sichergestellt, dass nicht derart viel Sperrfluid via den Radialspalt in den Bereich zwischen der Wellenstirnfläche und der der Trennplatte gelangen kann, dass der Druck an der Lagerstirnseite wesentlich absinkt.

Es ist bevorzugt, dass die Trennplatte parallel zu der Wellenstirnfläche und der Lagerstirnseite angeordnet ist. Dadurch können Engstellen für die Strömung des Sperrfluids vermieden werden. Die Engstellen können nachteilig zu der Ausbildung von Wirbeln führen. Die Trennplatte hat bevorzugt einen Abstand von der Wellenstirnfläche, der von 0,25*d bis 0,75*d, weiter bevorzugt von 0,5*d bis 0,75*d, besonders bevorzugt 0,5*d, beträgt, wobei d der Abstand zwischen der Wellenstirnfläche und der Lagerstirnseite ist. Durch den Mindestabstand der Trennplatte von der Lagerstirnseite ist vorteilhaft sichergestellt, dass das Sperrfluid durch Reibung nicht derart aufgewärmt wird, dass es das Lager angreifen kann. Durch den Mindestabstand der Trennplatte von der Wellenstirnfläche ist ebenfalls vorteilhaft sichergestellt, dass sich das Sperrfluid nicht wesentlich durch Reibung aufheizt. Die Trennplatte ist eher näher zu der Lagerstirnseite als zu der Wellenstirnfläche angeordnet, um die Scherkräfte im Bereich zwischen der rotierenden Wellenstirnfläche und der Trennplatte gering zu halten.

Die Trennplatte erstreckt sich bevorzugt nach radial außen im Wesentlichen bis mindestens zu dem radial außen liegenden Ende der Wellenstirnfläche. Damit ist vorteilhaft eine derartige Abschirmung der Lagerstirnseite von der Wellenstirnfläche erreicht, dass der Bereich zwischen der Trennplatte und der Lagerstirnseite beim Rotieren der Welle im Wesentlichen wirbelfrei ist. Es ist bevorzugt, dass die Trennplatte kreisringförmig um die Welle herum angeordnet ist. Indem die Trennplatte unterbrechungsfrei und kreisringförmig in Umfangsrichtung um die Welle herum angeordnet ist, können sich auch keine lokal begrenzten Wirbel zwischen der Trennplatte und der Lagerstirnseite ausbilden.

Die Trennplatte ist bevorzugt mittels an der Lagerstirnseite und an der Trennplatte angebrachten Abstandshaltern befestigt. Dadurch ist es möglich, die Trennplatte zusammen mit dem Lager in die Maschine einzubauen oder aus der Maschine auszubauen. Das Lager stellt ein Verschleißteil der Maschine dar und ein Nachrüsten der Maschine mit der Trennplatte kann somit besonders einfach bei einem routinemäßigen Austausch des Lagers erfolgen.

Es ist bevorzugt, dass die Maschine eine Strömungsmaschine ist, insbesondere eine Gasturbine. Es ist weiterhin insbesondere bevorzugt, dass die Sperrkammer mit der Trennplatte am Turbinenaustritt der Gasturbine angeordnet ist. Es ist vorteilhaft, die Trennplatte hier vorzusehen, weil ein Austreten des Schmierfluids am Turbinenaustritt der Gasturbine besonders kritisch ist, da es dort in Kontakt mit heißen Abgasen und heißen Teilen der Gasturbine treten und dabei verbrennen kann.

Im Folgenden wird anhand der beigefügten schematischen Zeichnungen die Erfindung näher erläutert. Es zeigen
- Figur 1: einen Längsschnitt durch eine Maschine,
- Figur 2: eine Detailansicht des Längsschnitts aus Figur 1 und
- Figur 3: die Strömungsverhältnisse in einer Sperrkammer der Maschine.

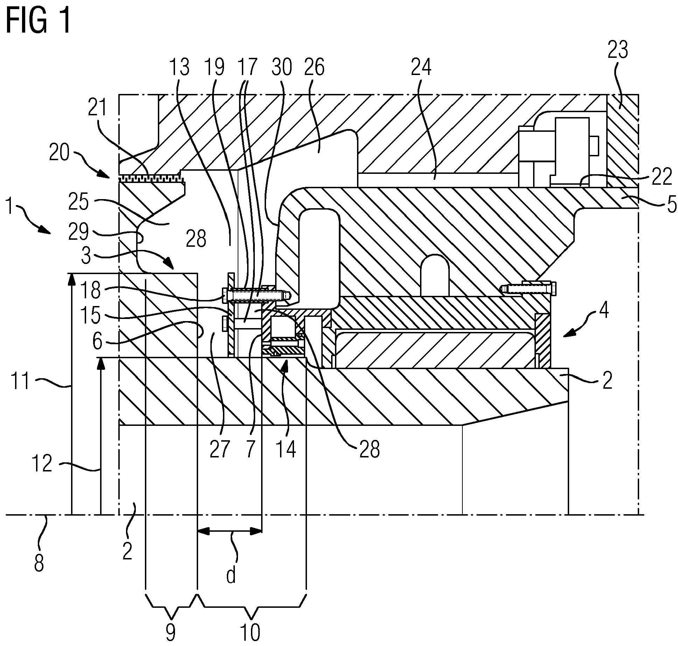

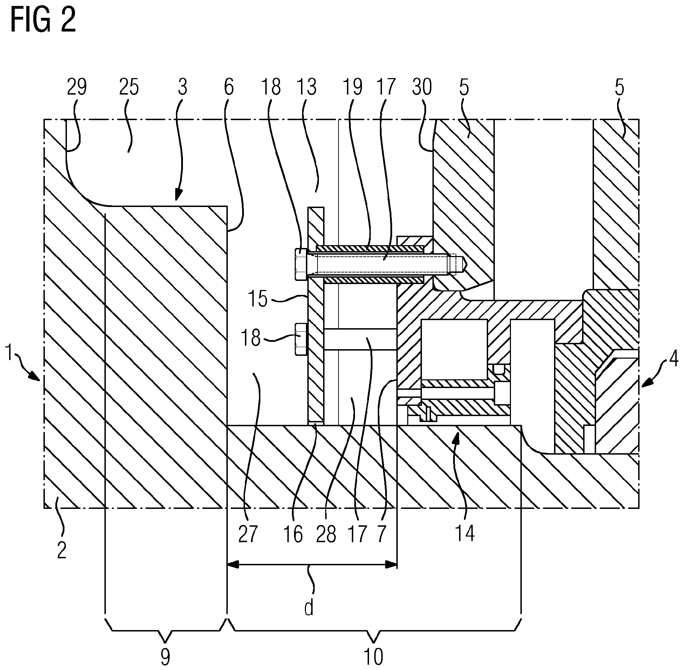

Wie es aus Figuren 1 bis 3 ersichtlich ist, weist eine Maschine 1 eine Welle 2 auf, die um eine Wellenachse 8 rotierbar ist. Weiterhin weist die Welle 2 eine Stufe 3 auf, wodurch die Welle 2 in Axialrichtung einen ersten Wellenabschnitt 9 mit einem ersten Radius 11 und einen zweiten Wellenabschnitt 10 mit einem zweiten Radius 12 aufweist. Der zweite Radius 12 ist dabei kürzer als der erste Radius 11. Durch die Stufe 3 weist die Welle 2 eine rotierbare Wellenstirnfläche 6 auf, die in der Grenzfläche zwischen dem ersten Wellenabschnitt 10 und zweiten Wellenabschnitt 11 angeordnet ist und sich radial zwischen dem ersten Radius 11 und dem zweiten Radius 12 erstreckt. Die Wellenstirnfläche 6 ist dadurch kreisringförmig.

Die Maschine 1 weist weiterhin ein feststehendes Gehäuse 5 und ein Lager 4 auf, das die Welle 2 an ihrem zweiten Wellenabschnitt 10 an dem Gehäuse 5 abstützt. Das Lager 4 ist mit einem Schmierfluid, insbesondere Öl, geschmiert und ist insbesondere ein Gleitlager. Das Lager 4 weist eine feststehende Lagerstirnseite 7 auf, die parallel zu der Wellenstirnfläche 6 und der Wellenstirnfläche 6 zugewandt angeordnet ist. Radial außerhalb der Lagerstirnseite 7 ist eine feststehende Gehäusestirnseite 30 angeordnet, die ebenfalls der Wellenstirnfläche 6 zugewandt angeordnet ist.

Die Maschine 1 weist eine Sperrkammer 13 auf, die im Betrieb der Maschine 1 mit einem Sperrfluid beaufschlagt wird, um ein Austreten des Schmierfluids aus dem Lager 4 in die Sperrkammer 13 zu unterbinden. Die Sperrkammer 13 ist axial begrenzt von der Wellenstirnfläche 6 und der Lagerstirnseite 7. Radial innen ist die Sperrkammer 13 begrenzt von der Radialaußenseite des sich von der Wellenstirnfläche 6 bis zu der Lagerstirnseite 7 erstreckenden Abschnitts des zweiten Wellenabschnitts 10.

Das Lager 4 weist eine Lagerdichtung 14 zum Abdichten des Lagers 4 zur Sperrkammer 13 hin auf. Die Lagerdichtung 14 ist auf der Radialaußenseite der Welle 2 im Bereich des zweiten Wellenabschnitts 10 und im Bereich der Lagerstirnseite 7 angeordnet. Um ein Austreten des Schmierfluids aus dem Lager 4 zu vermeiden, ist es erforderlich, dass der Druck des Sperrfluids an dem der Sperrkammer 13 zugewandten Ende der Lagerdichtung 14 höher ist als der Druck des Schmierfluids an diesem Ende.

In die Sperrkammer 13 ist eine feststehende und sich radial erstreckende Trennplatte 15 eingebracht. Die Trennplatte 15 kann beispielsweise ein Blech sein. Die Trennplatte 15 ist mit ihrer langen Seite parallel zu der Wellenstirnfläche 6 und der Lagerstirnseite 7 angeordnet und kreisringförmig ausgebildet. Durch das Einbringen der Trennplatte 15 in die Sperrkammer 13 werden eine Rotor-Stator-Kammer 27, die sich von der Wellenstirnfläche 6 bis zur Trennplatte 15 erstreckt, und eine Stator-Stator-Kammer 28 ausgebildet, die sich von der Trennplatte 15 bis zur Lagerstirnseite 7 erstreckt. Die Rotor-Stator-Kammer 27 und die Stator-Stator-Kammer 28 sind in Axialrichtung nebeneinander angeordnet.

Zwischen dem radial innen liegenden Längsende der Trennplatte 15 und der Radialaußenseite des zweiten Wellenabschnitts 10 ist ein Radialspalt 16 ausgebildet, der in Radialrichtung eine Erstreckung von 0,1 mm bis 10 mm hat. Die Trennplatte 15 hat einen Abstand von der Wellenstirnfläche 6, der von 0,25*d bis 0,75*d beträgt, wobei d der Abstand zwischen der Wellenstirnfläche 6 und der Lagerstirnseite 7 ist. Radial nach außen erstreckt sich die Trennplatte 15 gemäß Figuren 1 bis 3 im Wesentlichen bis zu dem ersten Radius 11. Es ist jedoch denkbar, die Trennplatte 15 auch weiter nach radial außen auszuführen.

Die Sperrkammer 13 weist eine erste Aussparung 25 auf, die in die Welle 2 eingebracht ist und sich radial außen an den ersten Radius 11 anschließt. Durch die erste Aussparung 25 ist eine Aussparungsstirnfläche 29 ausgebildet, die der Lagerstirnseite 7 zugewandt angeordnet ist. Die Sperrkammer 15 weist weiterhin eine zweite Aussparung 26 auf, die sich nach radial außen erstreckt. Das Sperrfluid mit atmosphärischem Druck kann aus der Umgebung 23 der Maschine 1 in die Sperrkammer 13 via eine durchströmbaren Passage gelangen. Im dargestellten Ausführungsbeispiel umfasst die Passage einen Au-ßenspalt 22, einen Kanal 24 und die zweite Aussparung 26 sowie nicht weitere dargestellte Kanäle, wodurch die Sperrkammer 13 mit der Umgebung in Strömungsverbindung steht. Ein Turbinenspalt 20 erstreckt sich von der Sperrkammer 13 bis zu einem Turbineninnenraum. Der Turbinenspalt 20 weist eine Turbinendichtung 21 auf. Damit kein Abgas aus dem Turbineninnenraum via den Turbinenspalt 20 in die Sperrkammer 13 gelangen kann, ist es erforderlich, dass der Druck des Sperrgases in der Sperrkammer 13 höher als der Druck des Abgases ist.

Die Maschine 1 weist eine Mehrzahl an Abstandshaltern 17 auf, die jeweils an der Lagerstirnseite 7 und an der Trennplatte 15 angebracht sind, um die Trennplatte 17 zu befestigen. Jeder der Abstandshalter 17 ist durch ein jeweiliges Loch in der Trennplatte 15 durchgeführt und weist einen Abstandshalterkopf auf, mit dem das Axialverschieben der Trennplatte 15 in Richtung zu der Wellenstirnfläche 6 begrenzt ist. Jeder Abstandshalter 17 ist von einer Hülse 19 umhüllt, mit der das Axialverschieben der Trennplatte 15 in Richtung zu der Lagerstirnseite 7 begrenzt ist.

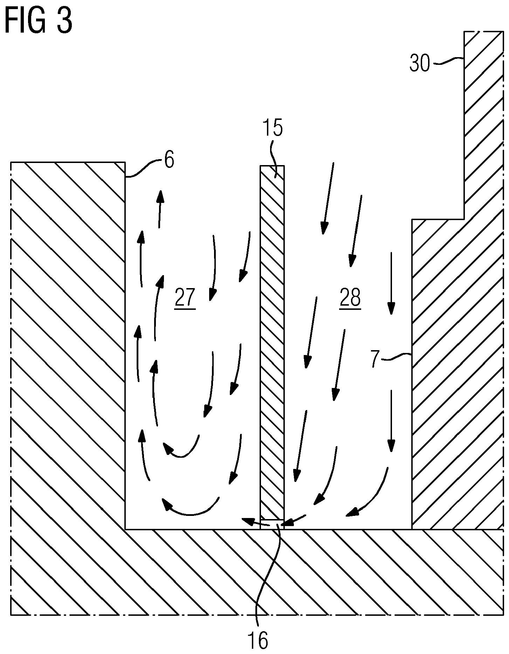

Die sich in der Sperrkammer 13 beim Rotieren der Welle 2 einstellenden Strömungsverhältnisse sind in Figur 3 dargestellt. Beim Rotieren der Welle 2 stellt sich in der Sperrkammer 13 eine Strömung ein, die angetrieben wird, weil an der rotierenden Wellenstirnfläche 6 durch Reibung das Sperrfluid nach radial außen transportiert wird. Aus Kontinuitätsgründen strömt in der Rotor-Stator-Kammer 27 das Sperrfluid an der Trennplatte 15 nach radial innen, so dass sich in der Rotor-Stator-Kammer 27 ein Wirbel ausbildet. In der Stator-Stator-Kammer 28 bildet sich eine Strömung aus, die im Wesentlichen nach radial innen gerichtet ist und durch den Radialspalt 16 in Richtung zu der Rotor-Stator-Kammer 27 gerichtet ist. Damit ist die Stator-Stator-Kammer 28, also der Bereich zwischen der Trennplatte 15 und der Lagerstirnseite 7, im Wesentlichen wirbelfrei.

In der Stator-Stator-Kammer 28 können sich in Ecken oder an Kanten kleine Wirbel ausbildet, diese kleinen Wirbel können jedoch den Druck in der Stator-Stator-Kammer 27 nicht bestimmen. Damit ist der Druck an der Lagerstirnseite 7 höher als es für eine Sperrkammer ohne Trennplatte der Fall wäre. CFD-Rechnungen für einige ausgewählte Fälle haben ergeben, dass der Druck an der Lagerstirnseite 7 an dem radial innen liegenden Ende der Sperrkammer 13 um 2 mbar bis 3 mbar höher ist als es für die Sperrkammer ohne Trennplatte der Fall wäre.

Auch der Druck an der Wellenstirnfläche 6 ist höher als es für die Sperrkammer ohne Trennplatte der Fall wäre, weil der Wirbel in der Rotor-Stator-Kammer 28 durch die Strömung durch den Radialspalt 16 einen höheren Druck aufgeprägt bekommt. Die CFD-Rechnungen haben ergeben, dass der Druck an der Wellenstirnfläche 6 an dem radial innen liegenden Ende der Sperrkammer 13 um 1,5 mbar bis 2,5 mbar höher ist als es für die Sperrkammer ohne Trennplatte der Fall wäre.

Es wird in der Sperrkammer 13 auch an der radial außerhalb des ersten Radius 11 angeordneten Aussparungsstirnfläche 29 das Sperrfluid nach radial außen gefördert. Die Trennplatte 15 gemäß Figuren 1 bis 3 erstreckt hier sich zwar nur im Wesentlichen bis zu dem ersten Radius 11, jedoch ist der Bereich radial außerhalb des Radius 11 unkritisch, weil hier der Abstand zwischen der Aussparungsstirnfläche 29 und der Lagerstirnseite 7 und/oder der Gehäusestirnseite 30 ausreichend groß ist, dass sich kein radiales Druckgefälle ausbilden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Maschine, wie eine Strömungsmaschine, mit einer Welle (2), die eine Stufe (3) aufweist, so dass ein erster Wellenabschnitt (9) mit einem ersten Durchmesser (11) und ein zweiter Wellenabschnitt (10) mit einem zweiten Durchmesser (12), welcher (12) kleiner als der erste Durchmesser (11) ist, und eine sich radial erstreckende sowie rotierbare Wellenstirnfläche (6) ausgebildet sind, und mit einem Gehäuse (5) und mit einem Lager (4), welches (4) die Welle (2) an ihrem zweiten Wellenabschnitt (10) an dem Gehäuse (5) abstützt und mit einem Schmierfluid geschmiert ist, wobei die Wellenstirnfläche (6) einer sich radial erstreckenden sowie feststehenden Lagerstirnseite (7) zugewandt ist, wodurch eine mit einem Sperrfluid, mittels dem ein Austreten des Schmierfluids aus dem Lager (4) unterbindbar ist, beaufschlagbaren Sperrkammer (13) ausgebildet ist, welche (13) axial von der Wellenstirnfläche (6) und der Lagerstirnseite (7) sowie radial innen von dem zweiten Wellenabschnitt (10) begrenzt ist und in der (13) eine sich radial erstreckende und feststehende Trennplatte (15) angeordnet ist, so dass eine aerodynamische Abschirmung der Lagerstirnseite (7) von der Wellenstirnfläche (6) erfolgt und der Bereich zwischen der Trennplatte (15) und der Lagerstirnseite (7) beim Rotieren der Welle (2) im Wesentlichen wirbelfrei ist, **dadurch gekennzeichnet,**
**dass** die Trennplatte (15) mittels an der Lagerstirnseite (7) angebrachten Abstandshaltern (17) befestigt ist, wobei beide durch die Trennplatte (15) getrennten Bereiche der Sperrkammer (13) über eine gemeinsame Passage (24,26) mit der Umgebung verbunden sind.

2. Maschine gemäß Anspruch 1,
wobei zwischen dem radial innen liegenden Längsende der Trennplatte (15) und der Welle (2) ein Radialspalt (16) ausgebildet ist.

3. Maschine gemäß Anspruch 2,
wobei der Radialspalt (16) eine Erstreckung in Radialrichtung von 0,1 mm bis 10 mm hat.

4. Maschine gemäß einem der Ansprüche 1 bis 3,
wobei die Trennplatte (15) parallel zu der Wellenstirnfläche (6) und der Lagerstirnseite (7) angeordnet ist.

5. Maschine gemäß einem der Ansprüche 1 bis 4,
wobei die Trennplatte (15) einen Abstand von der Wellenstirnfläche hat, der von 0,25*d bis 0,75*d, bevorzugt von 0,5*d bis 0,75*d, besonders bevorzugt 0,5*d, beträgt,
wobei d der Abstand zwischen der Wellenstirnfläche (6) und der Lagerstirnseite (7) ist.

6. Maschine gemäß einem der Ansprüche 1 bis 5,
wobei die Trennplatte (15) sich nach radial außen im Wesentlichen bis mindestens zu dem radial außen liegenden Ende der Wellenstirnfläche (6) erstreckt.

7. Maschine gemäß einem der Ansprüche 1 bis 6,
wobei die Trennplatte (15) kreisringförmig um die Welle (2) herum angeordnet ist.

8. Maschine gemäß einem der Ansprüche 1 bis 7,
wobei die Maschine eine Gasturbine ist, wobei insbesondere die Sperrkammer (13) mit der Trennplatte (15) am Turbinenaustritt der Gasturbine angeordnet ist.

## Claims

1. Machine, such as a continuous-flow machine, with a shaft (2), which has a step (3), so that a first shaft portion (9) with a first diameter (11), a second shaft portion (10) with a second diameter (12) which diameter (12) is smaller than the first diameter (11), and a radially extending and rotatable shaft end face (6) are formed, and with a housing (5) and with a bearing (4), which bearing (4) supports the shaft (2) on the housing (5) at its second shaft portion (10) and is lubricated with a lubricating fluid, wherein the shaft end face (6) faces a radially extending and stationary bearing end side (7), as a result of which a blocking chamber (13), to which a blocking fluid can be applied by means of which leaking of the lubricating fluid from the bearing (4) can be prevented, is formed, which blocking chamber (13) is limited axially by the shaft end face (6) and the bearing end side (7) and radially inward by the second shaft portion (10) and in which (13) a radially extending and stationary dividing plate (15) is arranged so that an aerodynamic shielding of the bearing end side (7) from the shaft end face (6) is effected and there are essentially no vortices in the region between the dividing plate (15) and the bearing end side (7) when the shaft (2) rotates, **characterized in that** the dividing plate (15) is fastened by means of spacers (17) attached on the bearing end side (7), wherein both regions of the blocking chamber (13) divided by the dividing plate (15) are connected to the environment via a common passage (26) .

2. Machine according to Claim 1, wherein a radial gap (16) is formed between the radially inwardly situated longitudinal end of the dividing plate (15) and the shaft (2) .

3. Machine according to Claim 2, wherein the radial gap (16) has an extent in the radial direction of 0.1 mm to 10 mm.

4. Machine according to one of Claims 1 to 3, wherein the dividing plate (15) is arranged parallel to the shaft end face (6) and the bearing end side (7).

5. Machine according to one of Claims 1 to 4, wherein the dividing plate (15) has a distance from the shaft end face which is from 0.25*d to 0.75*d, preferably from 0.5*d to 0.75*d, particularly preferably 0.5*d, wherein d is the distance between the shaft end face (6) and the bearing end side (7).

6. Machine according to one of Claims 1 to 5, wherein the dividing plate (15) extends radially outward essentially as far at least as the radially outwardly situated end of the shaft end face (6).

7. Machine according to one of Claims 1 to 6, wherein the dividing plate (15) is arranged in the form of a circle around the shaft (2).

8. Machine according to one of Claims 1 to 7, wherein the machine is a gas turbine, wherein in particular the blocking chamber (13) with the dividing plate (15) is arranged in particular at the turbine outlet of the gas turbine.

## Revendications

1. Machine, telle qu'une turbomachine, comprenant un arbre (2), qui a un gradin (3), de manière à constituer un premier tronçon (9) d'arbre d'un premier diamètre (11) et un deuxième tronçon (10) d'arbre d'un deuxième diamètre (12), lequel (12) est plus petit que le premier diamètre (11), et une surface (6) frontale d'arbre s'étendant radialement ainsi que tournante, et comprenant une enveloppe (5) et un palier (4), lequel (4) appuie l'arbre (2) par son deuxième tronçon (10) d'arbre sur l'enveloppe (5) et est lubrifié par un fluide de lubrification, la surface (6) frontale de l'arbre étant tourné vers un côté (7) frontal de palier s'étendant radialement ou fixe, grâce à quoi il est constitué une chambre (13) d'arrêt pouvant être alimentée en un fluide d'arrêt, au moyen duquel une sortie du fluide de lubrification du palier (4) peut être empêchée, chambre (13) qui est délimitée axialement par la surface (6) frontale d'arbre et par le côté (7) frontal du palier ainsi que vers l'intérieur radialement par le deuxième tronçon (10) d'arbre et dans laquelle (13) est disposée une cloison (15) fixe et s'étendant radialement, de manière obtenir un écran aérodynamique du côté (7) frontal du palier par la surface (6) frontale de l'arbre et la partie comprise entre la cloison (15) et le côté (7) frontal du palier est sensiblement sans tourbillonnement lorsque l'arbre (2) tourne,
**caractérisée**
**en ce que** la cloison (15) est fixée au moyen d'entretoises (17) montées sur le côté (7) frontal du palier, deux parties, séparées par la cloison (15), de la chambre (13) d'arrêt communiquant avec l'atmosphère ambiante par un passage (24, 26) commun.

2. Machine suivant la revendication 1,
dans laquelle une fente (16) radiale est constituée entre l'arbre (2) et l'extrémité longitudinale se trouvant à l'intérieur radialement de la cloison (15).

3. Machine suivant la revendication 2,
dans laquelle la fente (16) radiale a une étendue dans la direction radiale de 0,1 à 10 mm.

4. Machine suivant l'une des revendications 1 à 3,
dans laquelle la cloison (15) est parallèle à la surface (6) frontale de l'arbre et au côté (7) frontal du palier.

5. Machine suivant l'une des revendications 1 à 4,
dans laquelle la cloison (15) est à une distance de la surface frontale de l'arbre de 0,25*d à 0,75*d, de préférence de 0,5*d à 0,75*d, d'une manière particulièrement de 0,5*d,
d étant la distance entre la surface (6) frontale de l'arbre et le côté (7) frontal du palier.

6. Machine suivant l'une des revendications 1 à 5,
dans laquelle la cloison (15) s'étend vers l'extérieur radialement sensiblement jusqu'à au moins l'extrémité se trouvant à l'extérieur radialement de la surface (6) frontale de l'arbre.

7. Machine suivant l'une des revendications 1 à 6,
dans laquelle la cloison (15) est disposée en forme d'anneau de cercles autour de l'arbre (2).

8. Machine suivant l'une des revendications 1 à 7,
dans laquelle la machine est une turbine à gaz, dans laquelle notamment la chambre (13) d'arrêt est montée avec la cloison (15) à la sortie de la turbine à gaz.
